# FASCICULE DE BREVET EUROPEEN

(11) **EP 3 152 543 B1**
(45) Date de publication et mention de la délivrance du brevet: **10.05.2023**
(21) Numéro de dépôt: 15732425.2
(22) Date de dépôt: 03.06.2015
(51) Int. Cl.: G01N 1/22

(54) **DISPOSITIF DE PRELEVEMENT ET DE TRANSPORT DE NANO-OBJECTS CONTENUS DANS DES AEROSOLS, CASSETTE AVEC MODULE ADAPTE POUR REDUIRE LE BRUIT D'ASPIRATION LORS DU PRELEVEMENT**
VORRICHTUNG ZUR AUFNAHME UND TRANSPORT VON NANOOBJEKTEN IN AEROSOLEN MIT EINER KASSETTE MIT EINEM MODUL ZUR VERRINGERUNG DES EINLASSGERÄUSCHES WÄHREND DER AUFNAHME
DEVICE FOR PICKING AND TRANSPORTING NANOOBJECTS CONTAINED IN AEROSOLS, WITH A CASSETTE WITH A MODULE SUITED TO REDUCING THE SUCTION NOISE DURING PICKING

(30) Priorité: 04.06.2014 FR 1455053
(43) Date de publication de la demande: 12.04.2017
(73) Titulaire: Commissariat à l'Énergie Atomique et aux Énergies Alternatives, 75015 Paris (FR)
(72) Inventeur: CLAVAGUERA, Simon, F-38000 Grenoble (FR); BERNE, Philippe, F-38000 Grenoble (FR); GUIOT, Arnaud, F-38120 Saint Egreve (FR); REYNES, Mathias, 13100 Aix-en-Provence (FR)
(74) Mandataire: Cabinet Nony
(86) Numéro de dépôt international: PCT/IB2015/054210
(87) Numéro de publication internationale: WO 2015/186082

(56) Documents cités:
- WO-A1-2010/033293
- WO-A1-2013/050561
- US-A1- 2004 216 612
- US-A1- 2007 044 577
- US-A1- 2009 272 202
- US-B1- 8 689 648

## Description

### Domaine technique

La présente invention concerne le domaine de la collecte et de l'analyse des nanoparticules susceptibles d'être présentes en suspension dans l'air.

Elle concerne plus particulièrement la réalisation d'un dispositif de prélèvement et de transport de nano-objets contenus dans des aérosols, à cassette d'échantillonnage.

La présente invention vise à réduire le bruit d'émission lors du prélèvement, des moyens d'aspiration qui sont intégrés à l'appareil de prélèvement dans lequel la cassette d'échantillonnage est fixée de manière amovible.

### Etat de la technique

L'essor rapide des nanotechnologies rend indispensable la poursuite des travaux sur les impacts sanitaires et environnementaux de ces nouveaux matériaux afin d'avoir des conditions de sécurité optimales. Depuis quelques années, les nanoparticules, c'est-à-dire des particules de dimensions nanométriques ont fait l'objet d'intenses recherches et leur usage a commencé à se répandre dans divers domaines tels que la santé, la microélectronique, les technologies de l'énergie ou les produits de consommation courante tels que peintures et cosmétiques, Il est donc nécessaire de mettre au point des méthodes d'évaluation et de suivi de l'exposition aux nanoparticules des travailleurs, des consommateurs et de l'environnement.

Le développement de méthodes fiables d'échantillonnage et d'analyse d'aérosols nanométriques est ainsi un enjeu crucial en termes de santé publique et de prévention des risques au poste de travail. En particulier, le développement de dispositifs de prélèvement adaptés pour être portatifs et être fixés à l'unité à une combinaison de travail d'un travailleur en poste de fabrication de nano-objets, d'élaboration de nanomatériaux ou de produits en contenant pourrait s'avérer impératif.

La méthode de choix de prélèvement ou d'échantillonnage, c'est-à-dire actuellement privilégiée, consiste à aspirer un flux d'air susceptible d'être chargé en particules à travers un filtre qui est analysé ex post par diverses techniques (gravimétrique, microscopie, XRF, ...).

De l'art antérieur, il est déjà connu des dispositifs de prélèvement, aussi appelés échantillonneurs à cassette, qui sont portatifs et qui doivent échantillonner une contamination aérosol susceptible d'être inhalée par la bouche et le nez d'un individu lors de sa respiration.

Un échantillonneur est un appareil qui comporte notamment des moyens d'aspiration et sur lequel est fixée, en général de manière amovible une cassette d'échantillonnage logeant au moins un filtre de prélèvement des contaminants par aspiration.

L'échantillonnage par collecte de particules selon une méthode combinée d'aspiration et d'impaction inertielle est connu. L'impaction inertielle est le mécanisme par lequel des particules qui ont tendance à circuler dans la direction initiale de leur mouvement vont dévier des lignes d'écoulement pour s'impacter sur une surface.

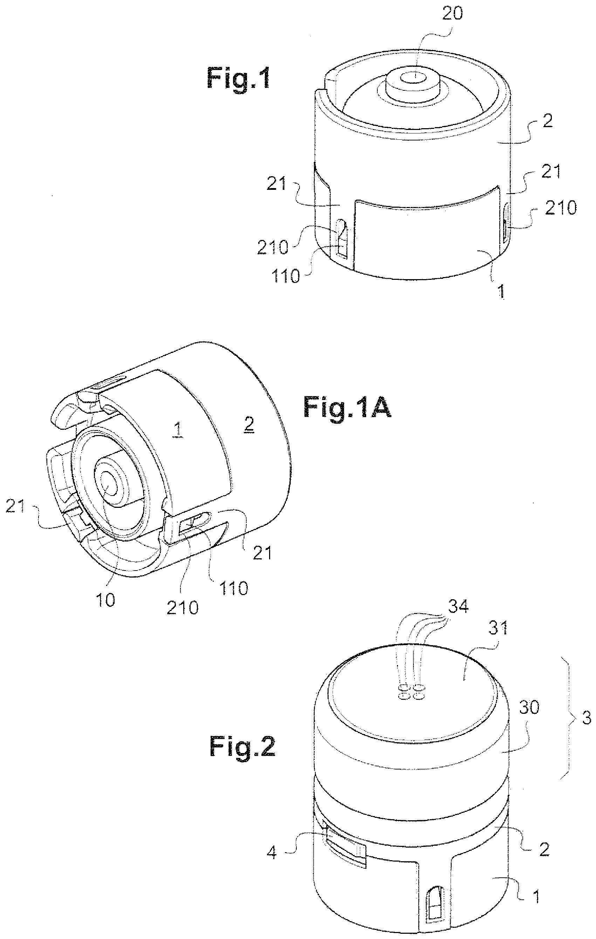

On peut se reporter par exemple à la publication [1] qui illustre le fait que la communauté scientifique et technique développe des dispositifs d'impaction inertielle depuis une trentaine d'années. En particulier, la figure 1 de cette publication schématise les lignes de courant et la trajectoire suivie des particules dans le cas d'un impacteur à un trou, avec les dimensions déterminantes pour définir le seuil de coupure de ce type d'impacteur. Ainsi, la sélection en taille des particules par impaction inertielle est connu, plus particulièrement pour les particules microniques et nanométriques.

Le brevet US 7334453 concerne un dispositif d'échantillonnage de particules par impaction inertielle. La société, titulaire de ce brevet, a publié par ailleurs un certain nombre de documents relatifs à ce dispositif. Il ressort ainsi que ce dispositif constitué d'un unique plateau d'impaction, permet de sélectionner des particules en suspension dans l'air ambiant, les particules étant de taille référencée PM₁₀ (particules jusqu'à 10µm de diamètre), PM_{2,5} (particules jusqu'à 2,5µm de diamètre) et PM_{coarse} (particules de diamètre compris entre 2,5 et 10µm). Le dispositif divulgué peut être utilisé pour un débit de 10 L/min. Dans un tel dispositif, les particules les plus grosses sont collectées sur le plateau d'impaction, préalablement graissé, tandis que les particules les plus fines sont collectées sur un filtre de 47 mm de diamètre. Le filtre ainsi que le plateau d'impaction sont logés dans un boitier utilisable directement in-situ et qui peut être jetable.

Par ailleurs, il est recommandé par les autorités sanitaires d'effectuer le prélèvement des nano-objets dans une zone définie comme étant la «sphère respiratoire» de la personne qui porte un échantillonneur. Ainsi, cette sphère respiratoire est une zone de 30 cm de rayon autour des entrées des voies respiratoire (nez, bouche). Ceci implique donc que l'échantillonneur puisse intégrer une pompe individuelle de prélèvement qui soit portative afin de le placer à une relative proximité du visage, c'est-à-dire dans la sphère respiratoire.

Or, les inventeurs ont constaté que le port d'une telle pompe génère des nuisances en termes d'ergonomie au travail. En particulier, les mouvements de la personne peuvent être entravés, le poids de plusieurs centaines de gramme d'une pompe ne peut être porté longuement, et surtout, la pompe émet lors de son fonctionnement pour le prélèvement un bruit d'émission continu susceptible d'être nuisible.

Dans de nombreuses applications dans lesquelles de l'air est aspiré, il est connu de réaliser des filtres avec réducteur de bruits (silencieux acoustique).

Ainsi, le brevet US 8584795B1 concerne un filtre-silencieux pour des compresseurs d'air humide ou des souffleurs d'air. Le filtre-silencieux divulgué est constitué de deux parties distinctes montées dans une enveloppe commune délimitant une chambre. En considérant le sens du flux, la partie la plus en amont fait office de filtre, tandis que celle le plus en aval joue le rôle d'un silencieux acoustique. Le silencieux acoustique est constitué d'un empilement de plaques présentant des ouvertures forçant le flux à passer à travers des chicanes. Ainsi, le flux d'air pénètre par l'entrée de la chambre du silencieux, puis le flux est divisé par un déflecteur en plusieurs petits jets de flux via des ouvertures semi-circulaires à l'intérieur d'une première chicane. Cette structure de silencieux participe ainsi à la réduction du bruit de l'ensemble.

La demande de brevet WO 2012/160263A1 concerne un appareil de filtration et d'aseptisation de l'air ambiant dont le principe de fonctionnement repose sur la purification mécanique: les particules présentes dans l'air impactent les nombreuses fibres des filtres présents. Pour présenter une bonne efficacité, l'appareil est équipé d'un ventilateur puissant qui génère un niveau d'émission sonore pouvant être incommodant s'il n'était pas traité. Ainsi, l'appareil divulgué comporte un silencieux acoustique adapté pour réduire le niveau sonore de l'installation aéraulique.

Le document US 8689648 B1 divulgue un appareil de prélèvement de particules d'aérosols exclusivement par impaction inertielle et vise explicitement à proposer un dispositif utilisant un ventilateur afin d'éviter l'utilisation d'une pompe.

Il ressort de l'étude de l'état de l'art qu'il n'a pas été proposé de dispositif permettant de réduire de façon notable l'émission de bruit à l'aspiration d'une pompe individuelle de prélèvement d'un échantillonneur à une cassette amovible d'échantillonnage logeant au moins un filtre de prélèvement des contaminants nano-objets par aspiration.

Le but général de l'invention est alors de pallier tout ou partie des inconvénients de l'art antérieur et notamment de réduire le bruit d'émission des moyens d'aspiration d'un appareil de prélèvement sur lequel est fixée une cassette d'un dispositif de prélèvement et de transport de nano-objets susceptibles d'être présents dans un aérosol.

Un but particulier de l'invention est de proposer un dispositif qui réponde au but général et qui soit en outre simple de réalisation et peu coûteux.

### Exposé de l'invention :

Pour ce faire, l'invention a tout d'abord pour objet un dispositif de prélèvement et de transport de nano-objets susceptibles d'être présents dans un aérosol en vue de leur analyse, comprenant :
- un filtre d'échantillonnage poreux apte à piéger des nano-objets susceptibles d'être en suspension dans l'aérosol,
- une cassette comportant des moyens de maintien du filtre dans une cavité en son sein, un orifice d'entrée apte à laisser passer l'aérosol par aspiration au travers du filtre et un orifice de sortie apte à laisser sortir, après aspiration au travers du filtre, l'air aspiré, exempt des nano-objets piégés.

Selon l'invention, le dispositif comporte, en amont de l'orifice d'entrée de la cassette, un module d'impaction inertielle distinct de la cassette et apte à, d'une part, collecter par impaction inertielle des particules d'une taille au-dessus d'une valeur seuil et à laisser passer l'aérosol contenant des particules de taille inférieures à la valeur seuil, et, d'autre part, à réduire, lors du prélèvement, le bruit d'émission des moyens d'aspiration de l'appareil de prélèvement sur lequel la cassette est fixée.

Autrement dit, le module selon l'invention permet une sélection des particules selon leur taille par impaction inertielle mais permet également de réduire notablement le bruit émis par la pompe.

Les particules sélectionnées permettent ainsi de contrôler la qualité de l'air ambiant d'un milieu, notamment un environnement de travail dans lequel sont manipulées des (nano) particules.

Selon un mode de réalisation avantageux, le module est un assemblage étanche des éléments suivants:
- un corps avec un orifice central en communication avec l'orifice d'entrée de la cassette,
- un premier plateau, dit plateau d'impaction inertielle maintenu dans le corps, et comportant une partie centrale pleine et, à sa périphérie des ouvertures allongées en communication avec l'orifice central du corps,
- un deuxième plateau, dit plateau-sélecteur, maintenu dans le corps au-dessus du plateau d'impaction inertielle, et comportant un ou plusieurs trous répartis sur un cercle autour de son centre, les trous étant en communication avec les ouvertures allongées.

Le diamètre (a) des trous est de préférence compris entre 0,1 et 1,5 mm.

L'épaisseur (b) du plateau-sélecteur définissant la longueur des trous est quant à elle de préférence comprise entre 0,5 et 2 mm, et la distance (c) d'écartement entre plateau-sélecteur et plateau d'impaction comprise entre 0,1 et 1 mm.

Selon une variante avantageuse, le module comporte une tête de prélèvement au-dessus du module en communication avec l'extérieur.

Avantageusement, la tête de prélèvement comprend un déflecteur apte à modifier l'angle de prélèvement relativement à l'axe longitudinal de la cassette.

Le module peut être fixé de manière amovible ou de manière permanente à la cassette.

L'invention concerne également l'utilisation d'un dispositif qui vient d'être décrit en tant qu'ensemble de suivi d'exposition d'opérateurs en poste de fabrication de nano-objets, d'élaboration de nanomatériaux ou de produits en contenant.

### Description détaillée

D'autres avantages et caractéristiques ressortiront mieux à la lecture de la description détaillée, faite à titre illustratif et non limitatif, en référence aux figures suivantes parmi lesquelles:
- la figure 1 est une vue de profil de la cassette de prélèvement d'une partie d'un dispositif de prélèvement selon l'invention, la cassette étant en configuration assemblée,
- la figure 1A est une vue de dessous de la cassette selon la figure 1 ;
- la figure 2 est une vue en perspective du dispositif de prélèvement selon l'invention avec la cassette de prélèvement selon les figures 1 et 1A sur laquelle est fixée un module d'impaction inertielle et de réduction des bruits selon l'invention ;
- la figure 3 est une vue en éclaté partiel du dispositif selon la figure 2 montrant la constitution du module d'impaction inertielle et de réduction des bruits selon l'invention;
- la figure 4 est une vue en perspective montrant un plateau-sélecteur qui associé à un plateau d'impaction constitue un module d'impaction inertielle et de réduction des bruits selon l'invention;
- la figure 5 est une vue schématique en coupe partielle d'un module d'impaction inertielle et de réduction des bruits selon l'invention,
- la figure 6 est une vue en perspective en éclaté montrant un module d'impaction inertielle et de réduction des bruits selon l'invention muni d'une tête de prélèvement selon une première variante, au-dessus d'une cassette de prélèvement;
- la figure 7 est une vue en perspective en éclaté montrant une tête de prélèvement selon une deuxième variante, avec déflecteur; au-dessus d'une cassette de prélèvement;
- la figure 8 est une vue en perspective en éclaté montrant un module d'impaction inertielle et de réduction des bruits selon l'invention, utilisé sans casette de prélèvement ;
- la figure 9 est un graphe caractérisant l'efficacité de dépôt de nanoparticules en fonction de leur diamètre aérodynamique d'un module d'impaction inertielle et de réduction des bruits selon l'invention,

Dans l'ensemble de la présente demande, les termes « vertical », « inférieur », « supérieur », « bas », « haut », « dessous », « dessus », « hauteur » sont à comprendre par référence par rapport à un dispositif de prélèvement avec la cassette agencée à la verticale avec l'orifice d'entrée en haut.

De même, les termes « entrée », « sortie », « amont » et « aval » sont à comprendre par référence par rapport au sens du flux d'aspiration au travers du dispositif de prélèvement.

Pour pouvoir réaliser un prélèvement de nano-objets susceptibles d'être contenus dans un aérosol, le dispositif selon l'invention comprend tout d'abord un filtre non représenté adapté pour piéger des nano-objets susceptibles d'être en suspension dans de l'air, logé et maintenu dans une cavité formée par une cassette en configuration fermée.

Ainsi, la méthode d'échantillonnage selon l'invention consiste à orienter la cassette fermée de telle sorte que l'air à analyser est aspiré par une pompe non représentée qui est intégrée à un appareil de prélèvement sur lequel la cassette est fixée, l'air aspiré l'étant depuis un orifice 20 et sort par l'orifice 10 de la cassette pour ensuite aller vers la pompe.

L'aspiration peut bien être entendue prévue selon un trajet inverse, c'est-à-dire depuis l'orifice 10 vers l'orifice 20. Les nano-objets ou particules de taille micrométrique ainsi aspirés seront collectés sur le filtre maintenu dans la cassette. On peut prévoir dans la méthode d'échantillonnage selon l'invention d'orienter la cassette de manière à ce que prélèvement soit le plus représentatif soit de la respiration par la bouche soit de celle par le nez. Ainsi, de préférence, pour simuler une respiration par le nez, on oriente la cassette de sorte à ce qu'elle soit verticale avec l'orifice d'aspiration 20 en bas et que l'on est ainsi une aspiration du bas vers le haut. De même, de préférence pour simuler une respiration par la bouche, on oriente la cassette pour avoir l'orifice d'aspiration 20 à l'horizontal.

Tel que représenté, le dispositif selon l'invention permet un prélèvement d'échantillon et le transport des nano-objets piégés, de manière sécurisée et avec une parfaite traçabilité.

Un ensemble de prélèvement et de transport de nano-objets comporte ainsi le dispositif avec cassette et filtre selon l'invention et un appareil de prélèvement sur lequel est fixée la cassette lors du prélèvement et qui intègre la pompe d'aspiration.

Tel qu'illustré aux figures 1 à 2, la cassette est constituée de deux pièces 1, 2 de forme générale cylindrique.

La pièce supérieure 2 est munie de pattes flexibles 21 ou autrement dit élastiquement déformables dont l'extrémité comporte une ouverture 210.

La pièce inférieure 1 est munie d'évidements 11 complémentaire individuellement à une patte 21 avec une extrémité comportant une excroissance complémentaire individuellement avec une ouverture 210. On peut bien entendu dans le cadre de l'invention prévoir un agencement des ouvertures ou excroissances complémentaires inversées, c'est-à-dire avec des excroissances individuellement dans un évidement de la pièce 2 et des pattes avec ouvertures sur la pièce 1.

L'agencement angulaire relatif entre pattes flexibles 21 de la pièce supérieure 2 est identique à celui des évidements 11 de la pièce inférieure 1.

Ainsi, en configuration assemblée mutuelle, les pattes 21, avec leurs ouvertures 210 viennent s'encastrer et se clipser précisément dans les évidements 11 et autour des excroissances 210 (figures 1 et 1A).

On pourra se reporter à la demande de brevet déposée ce jour par la demanderesse et intitulée «Ensemble de prélèvement et de transport de nano-objets contenus dans des aérosols, à cassette à ouverture sécurisée lors du prélèvement » et qui est relative à une réalisation avantageuse de la fixation d'une telle cassette sur un appareil de prélèvement.

Le filtre est quant à lui supporté par un porte filtre 4. En configuration assemblée des deux pièces 1, 2, le porte-filtre est maintenu pincé entre eux épaulements réalisés chacun sur une périphérie interne d'une des deux pièces 1, 2.

Avantageusement, le porte-filtre 4 est choisi en un matériau déformable élastiquement et présente alors une fonction supplémentaire de joint d'étanchéité entre les pièces inférieure 1 et supérieure 2 de la cassette. Autrement dit, on peut prévoir avantageusement un porte filtre à dureté plus faible que les matériaux des pièces 1 et 2 de la cassette, afin de s'écraser contre les épaulements en regard, par pression lors du clipsage. Le porte-filtre 4 ayant pour fonction d'être un support mécanique au filtre, il peut être de conformation globalement annulaire ou bien fait d'une pièce massive parcourue d'une multitude de trous débouchant via des canaux droits dans l'épaisseur de la pièce, cette multitude de trous formant alors le filtre en lui-même.

On veille de toute façon à ce qu'il génère un minimum de pertes de charge au niveau de l'aspiration.

Les inventeurs ont constaté que lors d'un prélèvement avec la cassette représentée en figures 1 et 1A, la pompe d'aspiration émettait un bruit d'émission continu dont le niveau n'était pas acceptable pour un utilisateur.

Par ailleurs, ils s'intéressaient à la collecte des nanoparticules par impaction inertielle.

De manière surprenante, en testant un module adapté à l'impaction inertielle rapporté sur la cassette, en amont de l'orifice d'entrée 20, ils ont pu constater qu'une réduction notable du bruit d'émission de la pompe d'aspiration.

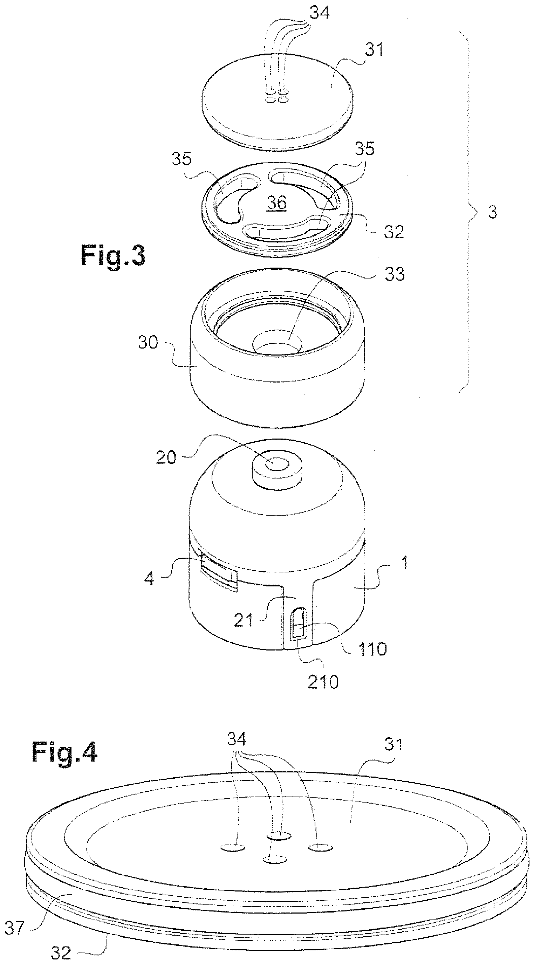

Ainsi, selon l'invention, tel qu'illustré en figures 2 et 3, il est prévu un module 3 apte à, d'une part, collecter par impaction inertielle des particules d'une taille au-dessus d'une valeur seuil et à laisser passer l'aérosol contenant des particules de taille en-dessous de la valeur seuil, et, d'autre part, à réduire, lors du prélèvement, le bruit d'émission des moyens d'aspiration de l'appareil de prélèvement sur lequel la cassette 1, 2 est fixée.

Autrement dit, le module 3 selon l'invention rapporté sur la cassette 1, 2 en amont de l'orifice d'entrée 20 permet à la fois de réduire le bruit en phase de fonctionnement lors du prélèvement et de sélectionner la taille des particules échantillonnées et représentatives d'un aérosol susceptible d'être inhalé par une personne.

On a représenté en figures 2 et 3, un exemple de réalisation d'un module d'impaction inertielle et de réduction des bruits 3 selon l'invention. Un tel module 3 est constitué par l'empilement de différentes pièces.

Un corps 30 étanche reçoit et positionne mécaniquement un plateau d'impaction 32 au-dessus duquel est agencé un plateau-sélecteur de particules 31.

Le corps étanche 30 comporte un orifice central 33 en communication avec l'orifice d'entrée 20 de la pièce supérieure 2 de la cassette, lorsque le module 3 est au-dessus de la cassette 1, 2.

Le plateau-sélecteur 31 comporte autour de sa partie centrale un ou plusieurs trous 34 calibrés.

Le plateau d'impaction 32 comporte une partie centrale 36 pleine et, à sa périphérie, des ouvertures oblongues 35.

Lorsque le module 3 est assemblé, la partie centrale 36 est agencée en regard des trous calibrés 34 et les ouvertures 35 sont en communication avec l'orifice central 33 du corps 30.

Comme montré en figure 4, un joint d'étanchéité annulaire 37 est prévu avantageusement entre le plateau 32 et le corps étanche 30.

Une marche non représentée, qui est réalisé à la périphérie, est nécessaire pour séparer les plateaux 31 et 32 d'une distance précise afin de garantir la distance entre les trous calibrés 34 et le plateau d'impaction 32 en regard.

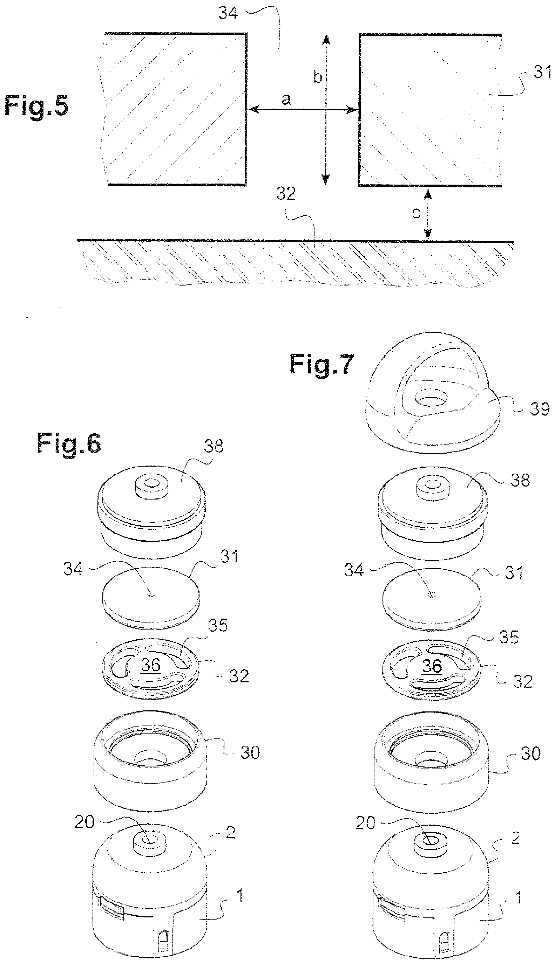

Les inventeurs ont pu constater que le diamètre (a) des trous calibrés 34 du plateau-sélecteur 31, leur nombre, l'épaisseur du plateau (b) ainsi que la distance (c) entre les plateaux 31 et 32 sont des paramètres à contrôler que l'on peut modifier pour obtenir le bon compromis entre collecte des particules et réduction du bruit, comme précisé dans les exemples ci-après. Les paramètres (a), (b) et (c) sont représentés schématiquement en figure 5.

De préférence, on sélectionne les gammes suivantes pour les paramètres :
(a) : compris entre 0,1 et 1,5 mm;
(b) : compris entre 0,5 et 2 mm
(c) : compris entre 0,1 et 1mm.

Selon une variante de réalisation, comme illustré en figure 6, le module 3 peut comporter une tête de prélèvement 38 qui vient se positionner au-dessus du plateau-sélecteur 31.

La tête de prélèvement 38 peut comporter un déflecteur 39 qui permet de modifier l'angle de l'axe de prélèvement. La modification de l'angle de prélèvement peut être selon n'importe quel angle, par exemple à 90° comme montré en figure 7.

Selon les matériaux constitutifs des différentes pièces du module 3, tel que métal, polymère ou autres, avantageusement dissipatifs de charges électriques, le maintien de ces différentes pièces 30, 31, 32, 38 ainsi que l'étanchéité entre elles peuvent être assurés par différents moyens. On peut envisager des liaisons par ajustement serré, soudage, collage, jointement, etc...On s'arrange à ce que les moyens de maintien soient compatibles avec le mode de fabrication, tel qu'usinage, moulage, impression 3D....

Le module 3 assemblé peut être fixé de manière amovible ou non sur une cassette de prélèvement 1, 2 tout en assurant également le maintien mécanique et l'étanchéité de l'ensemble de ce dispositif. On peut envisager un montage du module 3 sur la cassette 1, 2 par ajustement serré, vissage, soudage ou collage...

Les inventeurs ont testé différentes configurations géométriques des pièces 30, 31, 32 du module 3 selon l'invention.

Plus précisément, la géométrie et le nombre de trous 34 du plateau-sélecteur 31 de façon à évaluer l'évolution de l'atténuation sonore qui en résulte.

On précise que les essais ont été réalisés avec :
- une pompe commerciale utilisée à un débit de 0,6 L/min ;
- une cassette logeant un filtre en polycarbonate.

L'atténuation sonore a été mesurée en dBA à une distance de 30cm du dispositif à cassette 1,2 surmonté du module 3, avec la pompe en fonctionnement connectée par un tuyau au dispositif par l'orifice de sortie 10 de la cassette et déportée pour la mesure à une distance de 2m de la cassette.

Les résultats des essais sont indiqués dans le tableau ci-dessous.

On précise que dans ce tableau:
- X est la référence du plateau-sélecteur 31 étudié.
- n est le nombre de trous 34 répartis au centre du plateau pour n=1 et uniformément sur un cercle pour n>1, c'est-à-dire disposés à des angles de π/n par rapport au centre du plateau 31, soit 180° pour deux trous 34, 120° pour trois trous 34; 90° pour quatre trous 34. Le rayon du cercle sur lequel ils sont répartis est compris entre 1 et 4 mm, préférentiellement égal à 3,7 mm,
- d est le diamètre des trous en mm.

**TABLEAU**

| **X** | **n trous 34 disposés à π/n degrés autour du centre du plateau 31** | **d (mm)** | **niveau sonore (dBA)** |
|---|---|---|---|
| A | 1 | 0,64 | 51,65 |
| B | 1 | 1,83 | 60,0 |
| C | 2 | 1,04 | 57,7 |
| D | 2 | 1,61 | 61,4 |
| E | 3 | 0,51 | 53,4 |
| F | 3 | 1,27 | 61,7 |
| G | 4 | 0,53 | 55,5 |
| H | 4 | 1,12 | 58,4 |
| I | 4 | 1,43 | 62,5 |
| J | 6 | 0,52 | 56,8 |

A titre de comparaison, le niveau sonore mesuré en sortie de cassette de prélèvement 1,2 sans module 3 est de 75 dBA.

Du tableau ci-dessus, il ressort que l'atténuation sonore conférée par le module 3 selon l'invention fluctue de 51 à 62 dBA pour un nombre de trous entre 1 et 6.

Les inventeurs ont ensuite testé un plateau-sélecteur 31 selon la référence H en termes de sélection de particules.

Le choix s'est porté sur ce plateau 31 selon la référence H car il comporte un nombre de quatre trous qui permettent d'améliorer la représentativité de l'échantillonnage et une atténuation moyenne. Par ailleurs, le fait d'avoir un plateau 31 à quatre trous 34 permet de limiter les risques d'encrassement et de réentrainement des particules collectées.

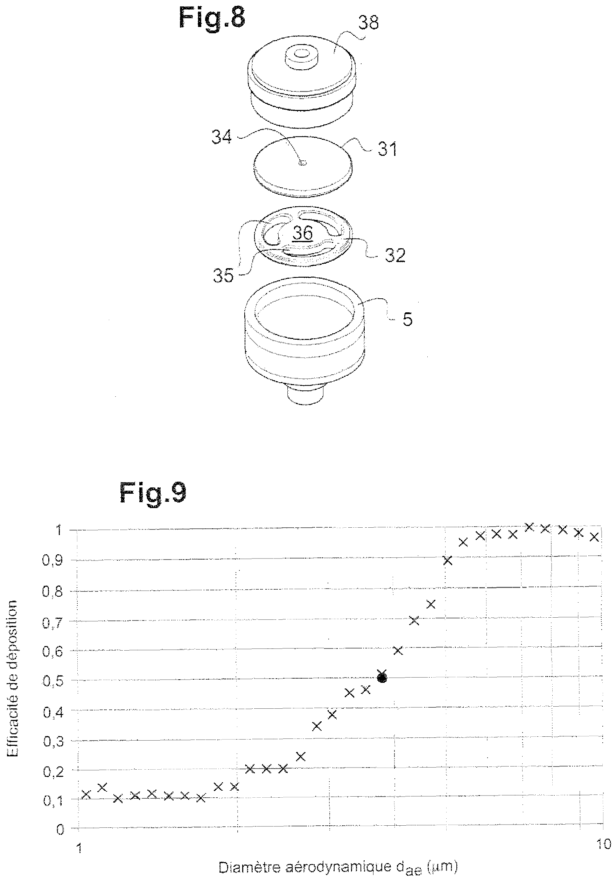

Le plateau 31 selon la référence H du tableau ci-dessus permet d'obtenir une sélection en taille des particules selon le graphe montré en figure 9.

On précise que l'abscisse donnée en figure 9 est le diamètre aérodynamique d'une particule dans un fluide qui est défini comme le diamètre équivalent à une sphère de densité égale à 1 g/cm³ qui a le même comportement aérodynamique.

A la lecture de ce graphe, les résultats expérimentaux du plateau 31 selon la référence H testé indiquent un diamètre de coupure, c'est-à-dire un diamètre au-delà duquel an moins 50% des particules sont impactées par le plateau 32, à 3,6µm.

Les dimensions critiques du plateau-sélecteur 31 et d'impaction 32 et entre eux, sont les suivantes:
a= 1,12mm
b = 1mm
c = 0,5mm
n = 4.

Le module 3 selon l'invention qui vient d'être décrit permet à la fois de
- réduire notablement l'émission sonore à l'aspiration sans toutefois générer de pertes de charges supplémentaires au dispositif de prélèvement et sans l'alourdir ;
- de sélectionner en taille des particules, le principe de l'impaction inertielle avec diverses géométries (nombre de trous, distance des trous 34 du plateau de sélection 31 -plateau d'impaction 32) permettant d'ajuster le diamètre de coupure (D_{50%}).

D'autres variantes et améliorations peuvent être apportées sans pour autant sortir du cadre de l'invention.

Plus particulièrement, bien que le module 3 selon l'invention soit utilisé dans le cadre de l'invention avec une cassette de prélèvement à deux pièces 1, 2, on peut mettre en œuvre un tel module seul, avec uniquement un plateau sélecteur 31 et plateau d'impaction 32 avec une distance c d'écartement entre eux et une étanchéité maîtrisées pour sélectionner des particules selon leur taille sans pour autant collecter celles qui passent sur un filtre en aval.

Autrement dit, le module 3 peut être utilisé seul sans cassette 1, 2 ou connecté à n'importe quelle géométrie de cassette par n'importe quel moyen (tuyau, ...).ou connecté à un compteur en temps réel.On a représenté en figure 8 une variante d'un module 3 d'impaction inertielle et de réduction des bruits selon l'invention, utilisé sans casette de prélèvement. Dans cette variante illustrée, il est prévu une tête de prélèvement 38 qui vient se positionner au-dessus du plateau-sélecteur 31 et les deux plateaux 31, 32 sont logés et maintenus de manière étanche dans un embout 5 de tuyau d'aspiration prévu à cet effet.

### Référence citée

[1] : Marple & Willeke "Impactor Design" Atmospheric Environment (1976) Vol. 10 pp 891-896.

## Revendications

1. Dispositif de prélèvement et de transport de nano-objets susceptibles d'être présents dans un aérosol en vue de leur analyse, comprenant :
- un filtre d'échantillonnage poreux apte à piéger des nano-objets susceptibles d'être en suspension dans l'aérosol,
- une cassette (1, 2) comportant des moyens de maintien du filtre dans une cavité en son sein, un orifice d'entrée (20) apte à laisser passer l'aérosol par aspiration au travers du filtre et un orifice de sortie (10) apte à laisser sortir, après aspiration au travers du filtre, l'air aspiré, exempt des nano-objets piégés .
- en amont de l'orifice d'entrée (20) de la cassette, un module (3) distinct de la cassette et apte à, d'une part, collecter par impaction inertielle des particules d'une taille au-dessus d'une valeur seuil et à laisser passer l'aérosol contenant des particules de taille inférieures à la valeur seuil, et, d'autre part, à réduire, lors du prélèvement, le bruit d'émission des moyens d'aspiration de l'appareil de prélèvement sur lequel la cassette est fixée,

2. Dispositif de prélèvement selon la revendication 1, le module (3) étant un assemblage étanche des éléments suivants:
- un corps (30) avec un orifice central (33) en communication avec l'orifice d'entrée (20) de la cassette,
- un premier plateau, dit plateau d'impaction inertielle (32) maintenu dans le corps, et comportant une partie centrale (36) pleine et, à sa périphérie des ouvertures allongées (35) en communication avec l'orifice central (33) du corps,
- un deuxième plateau, dit plateau-sélecteur (31), maintenu dans le corps au-dessus du plateau d'impaction inertielle (32), et comportant un ou plusieurs trous (34) répartis sur un cercle autour de son centre, les trous (34) étant en communication avec les ouvertures allongées (35).

3. Dispositif de prélèvement selon la revendication 2, le diamètre (a) des trous étant compris entre 0,1 et 1,5 mm.

4. Dispositif de prélèvement selon la revendication 2 ou 3, l'épaisseur (b) du plateau-sélecteur (31) définissant la longueur des trous étant comprise entre 0,5 et 2 mm.

5. Dispositif de prélèvement selon la revendication 2, 3 ou 4, la distance (c) d'écartement entre plateau-sélecteur (31) et plateau d'impaction (32) étant comprise entre 0,1 et 1 mm.

6. Dispositif de prélèvement selon l'une des revendications 2 à 5, le module (3) comportant une tête de prélèvement (38) au-dessus du module (3) en communication avec l'extérieur.

7. Dispositif de prélèvement selon la revendication 6, la tête de prélèvement (38) comprenant un déflecteur (39) apte à modifier l'angle de prélèvement relativement à l'axe longitudinal de la cassette.

8. Dispositif de prélèvement selon l'une des revendications précédentes, le module (3) étant fixé de manière amovible à la cassette (1, 2).

9. Dispositif de prélèvement selon l'une des revendications 1 à 7, le module (3) étant fixé de manière permanente à la cassette (1, 2).

10. Utilisation d'un dispositif selon l'une des revendications précédentes en tant qu'ensemble de suivi d'exposition d'opérateurs en poste de fabrication de nano-objets, d'élaboration de nanomatériaux ou de produits en contenant.

## Patentansprüche

1. Vorrichtung zur Entnahme und zum Transport von möglicherweise in einem Aerosol vorhandenen Nanoobjekten zum Zweck ihrer Analyse, die enthält:
- einen porösen Stichprobenfilter, der Nanoobjekte einfangen kann, die sich möglicherweise schwebend im Aerosol befinden,
- eine Kassette (1, 2), die Halteeinrichtungen des Filters in einem Hohlraum in ihrem Inneren, eine Eingangsöffnung (20), die fähig ist, das Aerosol durch Ansaugen durch den Filter hindurch durchzulassen, und eine Ausgangsöffnung (10) aufweist, die fähig ist, nach dem Ansaugen durch den Filter hindurch die angesaugte Luft ohne die eingefangenen Nanoobjekte austreten zu lassen,
- der Eingangsöffnung (20) der Kassette vorgelagert ein Modul (3), das sich von der Kassette unterscheidet und fähig ist, einerseits durch Trägheitsimpaktion Partikel einer Größe oberhalb eines Schwellenwerts zu sammeln und das Partikel einer geringeren Größe als der Schwellenwert enthaltende Aerosol durchzulassen, und andererseits bei der Entnahme die Lärmemission der Ansaugeinrichtungen des Entnahmegeräts zu reduzieren, auf dem die Kassette befestigt ist.

2. Entnahmevorrichtung nach Anspruch 1, wobei das Modul (3) ein dichter Zusammenbau der folgenden Elemente ist:
- ein Körper (30) mit einer zentralen Öffnung (33) in Verbindung mit der Eingangsöffnung (20) der Kassette,
- eine erste Platte, Trägheitsimpaktionsplatte genannt (32), die im Körper gehalten wird und einen massiven zentralen Teil (36) und an ihrem Umfang längliche Öffnungen (35) in Verbindung mit der zentralen Öffnung (33) des Körpers aufweist,
- eine zweite Platte, Selektorplatte genannt (31), die im Körper oberhalb der Trägheitsimpaktionsplatte (32) gehalten wird und ein oder mehrere Löcher (34) aufweist, die auf einem Kreis um ihre Mitte verteilt sind, wobei die Löcher (34) mit den länglichen Öffnungen (35) in Verbindung sind.

3. Entnahmevorrichtung nach Anspruch 2, wobei der Durchmesser (a) der Löcher zwischen 0,1 und 1,5 mm liegt.

4. Entnahmevorrichtung nach Anspruch 2 oder 3, wobei die die Länge der Löcher definierende Dicke (b) der Selektorplatte (31) zwischen 0,5 und 2 mm liegt.

5. Entnahmevorrichtung nach Anspruch 2, 3 oder 4, wobei der Abstand (c) zwischen Selektorplatte (31) und Impaktionsplatte (32) zwischen 0,1 und 1 mm liegt.

6. Entnahmevorrichtung nach einem der Ansprüche 2 bis 5, wobei das Modul (3) einen Entnahmekopf (38) oberhalb des Moduls (3) in Verbindung mit der Außenumgebung aufweist.

7. Entnahmevorrichtung nach Anspruch 6, wobei der Entnahmekopf (38) ein Leitblech (39) enthält, das fähig ist, den Entnahmewinkel bezüglich der Längsachse der Kassette zu ändern.

8. Entnahmevorrichtung nach einem der vorhergehenden Ansprüche, wobei das Modul (3) lösbar an der Kassette (1, 2) befestigt ist.

9. Entnahmevorrichtung nach einem der Ansprüche 1 bis 7, wobei das Modul (3) dauerhaft an der Kassette (1, 2) befestigt ist.

10. Verwendung einer Vorrichtung nach einem der vorhergehenden Ansprüche als Überwachungseinheit der Bedienerexposition an einer Station zur Fertigung von Nanoobjekten, zur Erzeugung von Nanomaterialien oder solche enthaltenden Produkten.

## Claims

1. Device for sampling and transporting of nano-objects liable to be present in an aerosol for purposes of their analysis, comprising:
- a porous sampling filter able to trap nano-objects liable to be in suspension in the aerosol,
- a cassette (1, 2) comprising means of holding the filter in a cavity inside it, an entrance orifice (20) able to let pass the aerosol by aspiration through the filter, and an exit orifice (10) able to let the aspirated air emerge, after aspiration through the filter, without the trapped nano-objects,
- upstream from the entrance orifice (20) of the cassette, a module (3) distinct from the cassette and able on the one hand to collect by inertial impact particles with a size above a threshold value and to let pass the aerosol containing particles with a size smaller than the threshold value, and on the other hand to reduce during the sampling process the noise emitted by the means of aspiration of the sampling apparatus to which the cassette is secured.

2. Device for sampling according to Claim 1, the module (3) being a tight assembly of the following elements:
- a body (30) with a central orifice (33) in communication with the entrance orifice (20) of the cassette,
- a first plate, or inertial impact plate (32), held inside the body, and comprising a central solid portion (36) and elongated openings (35) at its periphery in communication with the central orifice (33) of the body,
- a second plate, or selector plate (31), held inside the body above the inertial impact plate (32), and comprising one or more holes (34) distributed in a circle around its center, the holes (34) being in communication with the elongated openings (35).

3. Device for sampling according to Claim 2, the diameter (a) of the holes being between 0.1 and 1.5 mm.

4. Device for sampling according to Claim 2 or 3, the thickness (b) of the selector plate (31) defining the length of the holes being between 0.5 and 2 mm.

5. Device for sampling according to Claim 2, 3 or 4, the spacing (c) between the selector plate (31) and impact plate (32) being between 0.1 and 1 mm.

6. Device for sampling according to one of Claims 2 to 5, the module (3) comprising a sampling head (38) on top of the module (3) in communication with the outside.

7. Device for sampling according to Claim 6, the sampling head (38) comprising a deflector (39) able to modify the angle of sampling with respect to the longitudinal axis of the cassette.

8. Device for sampling according to one of the preceding claims, the module (3) being secured in a removable manner to the cassette (1, 2).

9. Device for sampling according to one of Claims 1 to 7, the module (3) being secured in a permanent manner to the cassette (1, 2).

10. Use of a device according to one of the preceding claims as an assembly for tracking the exposure of workers at a manufacturing station for nano-objects, processing of nano-materials, or of products containing them.
